(19)

(11) **EP 3 676 439 B1**

(12) **EUROPEAN PATENT SPECIFICATION**

(45) Date of publication and mention of the grant of the patent: **01.01.2025 Bulletin 2025/01**

(21) Application number: **18852702.2**

(22) Date of filing: **31.08.2018**

(51) International Patent Classification (IPC):
***D06F 39/10*** *(2006.01)* ***D06F 17/02*** *(2006.01)*
***D06F 39/08*** *(2006.01)* ***D06F 33/32*** *(2020.01)*
*D06F 23/02 (2006.01)* *D06F 103/42 (2020.01)*
*D06F 105/06 (2020.01)* *D06F 105/54 (2020.01)*

(52) Cooperative Patent Classification (CPC):
**D06F 33/32; D06F 39/10;** D06F 23/02; D06F 39/085; D06F 39/088; D06F 2103/42; D06F 2105/06; D06F 2105/54

(86) International application number: **PCT/SE2018/050876**

(87) International publication number: **WO 2019/045632 (07.03.2019 Gazette 2019/10)**

(54) **A METHOD FOR A WASHING MACHINE AND A WASHING MACHINE**

VERFAHREN FÜR EINE WASCHMASCHINE SOWIE WASCHMASCHINE

MACHINE À LAVER ET SON PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2017 SE 1751048**

(43) Date of publication of application: **08.07.2020 Bulletin 2020/28**

(73) Proprietor: **CleanGuard AB**
**131 52 Nacka Strand (SE)**

(72) Inventor: **MAGNUSSON, Fredrik**
**SE-132 37 Saltsjö-Boo (SE)**

(74) Representative: **Zacco Sweden AB**
**P.O. Box 5581**
**Löjtnantsgatan 21**
**114 85 Stockholm (SE)**

(56) References cited:
**WO-A1-02/48445**
**WO-A1-2014/047896**
**DE-A1- 102011 086 137**
**ES-T3- 2 438 188**
**JP-A- H0 994 383**
**JP-A- H09 262 396**
**JP-A- H11 276 794**
**US-A- 5 613 379**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 676 439 B1

## Description

### Technical field

The present invention relates generally to a method for a washing machine.

### Background

During laundry, one problem (among others) has been identified. The problem relates to the existence of microfiber in the sewage water especially synthetic microfibers. The knowledge of the problems related to fibers in the sewage water is increasing rapidly.

The object of the present invention is to remove, or at least mitigate, the problem discussed above. More specifically the object is to achieve effective filtering of microfibers of the liquid and removing the microfibers of the washing liquid.

JP H11276794 A describes a water-saving washing machine for washing and rinsing while purifying washing water. The washing machine is provided with at least a soiling filter in a circulating path circulating water within a water tank, a bypass having a detergent filter, a switching means alternatively selecting weather or not a side is switched to the side of the bypass and switches to the bypass in a rinsing process. A as a result, because washing can be performed, while removing soiling by circulating washing water in a washing process, washing efficiency is improved. In a rinsing process, efficient rinsing can be performed because detergent components are mainly purified.

WO 02/48445 Al shows a washing machine including a re-circulation path along which washing fluid passes from the washing chamber to be returned to the washing chamber. The path includes a filter having pores with an average size of less than 1 μm for removal of small particles including bacteria and zeolites. Preferably, a bypass path is provided for bypassing the sub-micron filter, the bypass path preferably including a filter having a coarse pore size.

### Summary

The above-mentioned object is achieved by the present invention according to the independent claims.

According to one aspect, it is presented a method for a washing machine, according to claim 1, is provided.

According to another aspect, a washing machine, according to claim 6, is provided.

Herein, the term "washing liquid" may also include any rinsing water used.

Embodiments are set forth in the dependent claims.

One advantage is that microfibers, especially synthetic microfibers, are removed by recycling the washing liquid possibly including any rinsing water used through a filter unit for microfibers during washing. Recycling reduces the concentration of microfibers before the washing liquid is let out (typically flushed out) of the machine into the environment. The filtered off microfibers are collected by the filter in the filter unit. The filter unit for filtering off and collecting microfibers is removed or cleaned after washing. Further one advantage with the provided method is that by filtering a longer time and at a lower flow rate it is possible to use smaller filter with higher density compared to the conventional filtering at the emptying of the washing unit at the end of a washing phase.

### Brief description of the drawings

Figure 1 is a block diagram schematically illustrating a washing machine according to prior art;
Figure 2 is a flowchart of a method of a machine comprising a washing unit for washing items;
Figure 3 is a time schedule showing an example of active and non-active recycling period configuration of a washing program;
Figure 4 is a time schedule showing another example of active and non-active recycling period configuration of a washing program;
Figure 5 is a diagram illustrating the concentration variation of microfibers in a washing liquid over time;
Figure 6a is a block diagram schematically illustrating a machine adapted to solve the micro fiber problem, being an illustrative embodiment not falling under the scope defined by the claims;
Figure 6b is a block diagram schematically illustrating another embodiment of a machine adapted to solve the micro fiber problem, being an illustrative embodiment not falling under the scope defined by the claims;
Figure 7 is a block diagram schematically illustrating an embodiment of the machine in figure 6a, being an illustrative embodiment not falling under the scope defined by the claims;

Figure 8 is a block diagram schematically illustrating an embodiment of the washing machine in figure 6a, according to the invention;

Figure 9 is a cross-sectional view of a microfiber filtering off unit;

Figure 10 is a cross-sectional view of a microfiber filtering off unit in a detergent unit forming a detergent and filter unit;

Detailed description of embodiments

The method, and the machine where the method is applied, will now be described in detail with references to the appended figures. Throughout the figures the same, or similar, items have the same reference signs. Moreover, the items and the figures are not necessarily to scale, emphasis instead being placed upon illustrating the principles of the invention.

The term "washing liquid" or "liquid" refers not only to water, but to any liquid, with or without chemical compounds, suitable for washing and/or washing machines. This term also includes rinsing water.

The present disclosure relates generally to washing machines and more particularly to a filtering method and a machine to filter the liquid during the washing procedure.

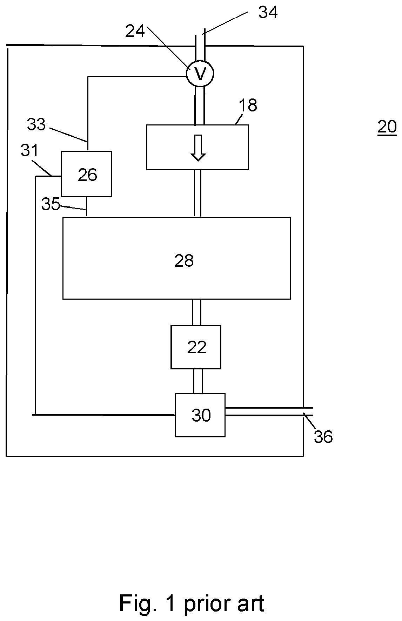

Figure 1 is schematically illustrating a machine for washing items according to prior art. The machine 20 comprises a washing unit 28 wherein one or more items are placed to be washed by a washing liquid with or without washing detergent or other chemical compound, mainly for washing machines. The washing unit can comprise a washing drum, a bucket wheel washer, washing roll, cylinder washer or rotating sprinklers. The washing detergent(s) may be provided in any available suitable shape or consistency; e.g. as powder, pellets, solid unit, or soaked in the fibers of the filter members. The detergent is placed in a detergent compartment 18 of the machine, which compartment is flushed with liquid when a washing program is started. The liquid is provided via a liquid inlet 34 that may be opened or closed by means of a controller controlled valve 24. The liquid inlet 34 and the controlled valve 24 constitute together an inlet device. The inlet device may only comprise the liquid inlet 34. The inlet device may as well be designed in many different ways. When the valve 24 is opened, liquid flushes the detergent compartment 18 and the washing detergent is transported by the liquid into the washing unit 28. The machine 20 is able to perform different user selectable washing programs by means of a controller 26 which may be implemented as one or more programmable processors executing computer software comprising instructions for executing the washing programs. The controller involves memory capacity for storing the computer software and data for enabling the function of the machine 20. The controller further comprises in/out interfaces for enabling sending and receiving of data and data signaling of washing parameters, e.g. such as measured liquid temperature, electric motor speed, pump speed, open or close valves, etc. The controller is therefore connected via control buses 31, 33, and 35 to different units of the machine, e.g. such as the washing unit 28, an outlet pump 30, the inlet valve 24.

A washing program may involve different washing phases, e.g. prewashing, main washing, and rinsing or washing. A washing phase period is the time period between a liquid filling and emptying of the washing unit. The washing phase period is determined by the washing program. Each phase comprises different operations, sometimes denoted washing moments or washing procedures, such as liquid filling, liquid heating, liquid emptying.

When a washing phase is finished at the end of its period, the washing unit 28 is emptied by starting an outlet pump 30 that transports the used liquid via tubes from the washing unit 28 and an outlet filter 22 to the liquid outlet 36. The liquid outlet 36, the outlet pump 30 and outlet filter 22 constitute together an outlet device. The outlet device may only comprise the liquid outlet 36. The outlet device may as well be designed in many different ways.

The outlet filter 22 is a removable filter for collecting hard and/or large items, e.g. buttons, needles, coins, seeds, stones, gravels, broken glass, etc. The outlet filter 22 is placed upstream from the outlet pump 30, i.e. between the pump and washing unit, to protect the pump propellers and other components, e.g. the electric motor of the pump, from being destroyed by such hard items. Said outlet filter 22 is NOT configured to filter and collect small soft items such as synthetic textile and plastic microfibers and micro particles in the range of micrometers. Such fibers are flushed out of the washing machines and ends up in the seas, lakes and watercourses, where the fibers are collected by different water living organisms. Said small fibers are regarded as an essential environmental problem to be solved.

Micro particles and microfibers are normally regarded as being particles and fibers between 0.1 and 100 μm in size.

It is hereafter presented a method and a machine and embodiments thereof for hindering said microfibers and micro particles from clothes and other textile to be flushed into the environment.

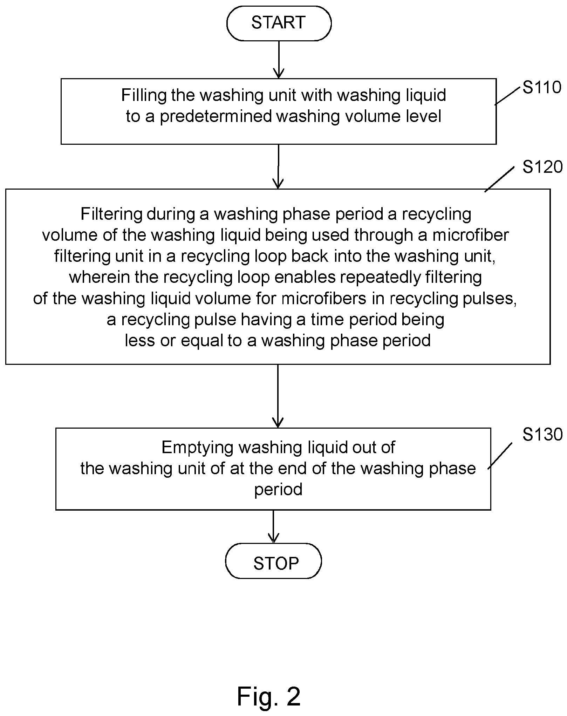

Figure 2 is a flowchart of a method, S 100, for removing microfibers by filtering and cleaning used washing liquids for microfibers during the running of a washing phase.

The machine comprises a washing unit for washing items by means of at least one washing liquid and a washing controller for controlling the operation of the machine at least during washing phase periods. The method S100 comprising:

- filling (S110) the washing unit with washing liquid to a predetermined washing volume level;
- filtering (S120) during a washing phase period a recycling volume of the washing liquid being used through a filtering unit, for filtering off microfibers, in a recycling loop back into the washing unit,;

- emptying (S130) washing liquid out of the washing unit at the end of the washing phase period.

Typically, the recycling loop enables repeatedly filtering of the washing liquid volume for microfibers in recycling pulses, a recycling pulse having a time period being less or equal to a washing phase period
Typically, the filling of the washing unit, S110, with washing liquid to a predetermined level is considered to be the washing procedure at the start of a washing phase. A predetermined level is herein the liquid level pre-set in the washing program and washing parameters. Washing parameters are variables which are set, measured and controlled during a selected washing program. A washing program is defined by predefined washing parameters, e.g. washing temperature, water level, washing time, washing unit speed, washing volume level, number of washing phases, number of recycling pulses during a phase, material of textile, etc. Said predetermined level may be different depending on which washing phase of washing program that is executed. The emptying of washing liquid, S130, is at the end of the washing phase period and the last washing procedure of a washing phase.

Step S120 is performed between steps S110 and S130 of a washing phase, said step S120 comprising filtering during a washing phase period a recycling volume of the washing liquid being used through a filtering unit in a recycling loop back into the washing unit, wherein the recycling loop enables repeatedly filtering of the washing liquid volume for filtering off microfibers in recycling pulses, a recycling pulse having a time period being less or equal to a washing phase period.

Typically, the filtering is performed by pumping a limited amount of the washing liquid volume for not disturbing the washing in the washing unit through a conduit system connecting at least one pump, the filtering unit and the washing unit in a loop, herein denoted recycling loop. Said loop may also be denoted filtering or cleaning loop. The filtering unit comprises any kind of filter capable of filtering off, including catching and collecting fibers, preferable synthetic fibers, in the size range between 0.1 and 100 $\mu$m in the washing liquid.

Thus, the filtering unit of the recycling loop is therefore herein referred to as microfiber filtering unit, see reference number 40 in the following drawings.

The filter of the microfiber filtering unit could be produced in any suitable material for the purpose, i.e. the filter of the microfiber filtering off unit does not need to be made of microfiber materials; other materials than microfiber may be used.

The filtering unit, or microfiber filtering off unit, is of course capable of catching and/or collecting in the washing liquid fibers, particles and dirt which size are larger than 100 $\mu$m. One advantage with the filtering during the washing phase, except for the removal of synthetic microfibers that are harmful for the environment, is that better washing result and cleaner textile items, are achieved compared to conventional washing and filtering at the end of a washing phase.

A filter unit is preferably configured and designed so the filtered off fibers, particles and dirt can be removed. The filter of the filtering unit is preferably made from environmentally acceptable material(s) that may be recycled, e.g. various textile fiber materials, cellulose-based materials, etc.

The word recycling is selected for distinguishing the filtering and recycling of washing liquid from the emptying of the washing liquid in the washing unit when a washing phase is finished.

The filtering off to catch newly released microfiber before they get trapped in the washed textiles again is performed continuously or in recycling periods, herein also denoted recycling pulses or pulsed recycling, during a washing phase period. A washing program may involve washing phases wherein continuously recycling and filtering off microfibers is used in one or two washing phases and pulsed recycling.

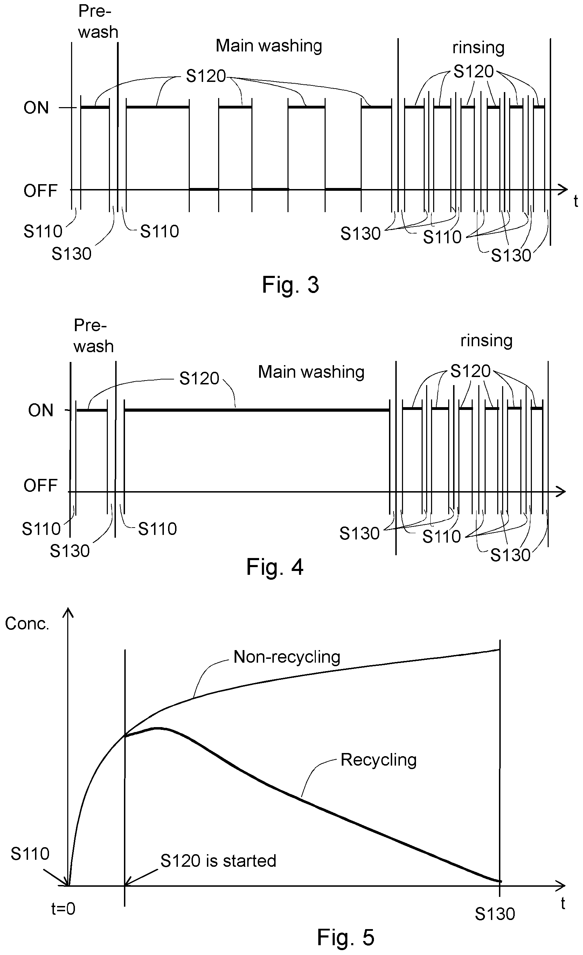

The filtering during a recycling period, i.e. a recycling pulse period, is achieved by pumping a limited amount of the washing liquid from the washing unit through a filtering unit and back to the washing unit for lowering the concentration of microfibers in the total washing liquid volume level, $V_{WL}$. Recycling pulses are illustrated in figures 3 and 4. The recycling pulses are indicated as S120 in said figures.

The total volume of washing liquid that is recycled and filtered during a recycling pulse i is herein denoted a pulse recycling volume, $V_{PU,i}$.

A phase recycling volume, $V_{PH,k}$, of the washing liquid is the amount or volume of the washing liquid that has passed through the recycling loop during a washing phase period k of the washing program.

Thus, a phase recycling volume, $V_{PH,k}$, comprising i = n recycling pulses i is the sum of pulse recycling volumes, $V_{PU,i}$ during a washing phase is:

$$V_{PH,k} = \sum_{i=1}^{n} V_{PU,i} \quad i = 1, \ldots, n \quad \ldots\ldots\ldots \text{eq. (1)}$$

The total recycled and filtered volume during a washing program $V_{PG}$ comprising k=N washing phases k is

$$V_{PG} = \sum_{k=1}^{N} V_{PH.k} \quad k = 1, \ldots, N \quad \ldots\ldots\ldots \text{eq. (2)}$$

The method S100 enables the recycling volume $V_{PH,k}$ during one or more washing phase periods k to be larger than the washing volume level, $V_{WL}$, during a washing phase. The advantage by using the recycling filtering of the method S100 over conventional filtering where the filtering is performed one time during the outlet and outlet filter is that it is possible to filter a larger volume of the washing liquid than only the washing volume level, $V_{WL}$, during a washing phase. It will also reduce the risk for filter clogging as all lose microfibers will not pass during one short time. Further, one drawback with conventional washing and filtering is that much of lose microfibers is caught in the washed textile again and not by the filter as in the method S 100.

Even if the recycling volume, $V_{PH,k}$, during one or more washing phase periods k is less than the washing volume level, $V_{WL}$, the total filtered and recycled volume during a washing program , $V_{PG}$, can be larger than the washing volume level $V_{WL}$,of each washing phase of the washing program if the recycling pulse periods are configured correctly during a washing program. This recycling problem is solved by knowing the capacity of the recycling loop, i.e. the flow rate expressed as volume per time unit, and washing parameters of the washing program, e.g. the number (k=N) of washing phases of a washing program and the washing time of the washing phases. It is from such data possible to configure time schedule diagrams showing examples of active and non-active recycling period configuration of a washing program and further adapt the length and number (i = n) of active recycling periods of the recycling pulses to each phase to fulfil any filtering and recycling condition. An example of a condition may be that filtering during the washing phase periods shall involve filtering the washing volume level $V_{WL}$ multiple times, such that $V_{PG} = X \cdot V_{WL}$, wherein X is any positive number or positive rational number. It is then possible to determine by means of equations (1) and (2) how to configure active and non-active recycling periods, number of pulses and their length, as the recycling loop capacity is known. It is further possible to adapt, determine and control the number of washing phases and recycling pulses in dependence of the material in the textile to be washed. Some materials may produce more synthetic microfibers than others and the washing program should therefore be adapted to such a circumstance.

According to an embodiment, the machine is provided with a controller for executing the method S100 and a recycling loop comprising a microfiber filtering unit for filtering microfibers and microparticles during washing phase periods to continuously lower the concentration of microfiber in the washing liquid.

Figures 3 and 4 are time schedule diagrams showing examples of active and non-active recycling period configuration of a washing program. In said time schedules, the washing program comprises different washing phases, prewashing, main washing, and rinsing or washing. The rinsing washing phase comprises six separated rinsing phases, sub-rinsings. A washing phase period is the time period between a liquid filling, S110, and emptying of the washing unit, S130. The washing phase period is determined by the washing program. Each phase comprises different operations, sometimes denoted washing moments or washing procedures, such as liquid filling, liquid heating, liquid emptying.

The active pumping of a washing liquid through the microfiber filtering unit is performed in active periods, pulses, of predetermined length, during a washing phase. Such a pulse is herein denoted as recycling pulse or filtering pulse, S 120. The number of recycling pulses, i.e. the pulse intensity, during a washing phase may be preset by a manufacturer. The active recycling periods are indicated as "ON", while the non-active recycling periods are indicated as "OFF". During a non-active recycling period, the pumping of washing liquid through the microfiber filtering unit is off. During a recycling pulse length at least a part of the washing liquid volume is recycled, i.e. pumped, through the microfiber filtering unit for filtering off including removing microfibers and back into the active washing compartment for further use.

A number of recycling pulses may be organized in and constitute a filtering sequence of pulses during a washing phase, see the main washing and rinsing phases in figure 3. The recycling pulse length for different washing phases may be preset by the manufacturer and the pulse length and how often they occur, i.e. the time interval between the pulses during a washing phase determines how much of the washing liquid that is filtered. The time interval between the recycling pulses may be equidistant or increasing alternatively decreasing towards the end of the washing phase. For example, more fibers may lose from an item, e.g. textile, synthetic, or clothing, during the beginning or at the end of a washing phase. It is an advantage to adapt the pulse intensity of a filtering sequence to when the fiber loosing from the textiles is most intensive during a washing phase.

According to other embodiments of the method, the pumping of the washing liquid through the microfiber filtering unit is performed continuously during a washing phase.

Figure 4 is a time schedule diagram showing another example of active and non-active recycling period configuration of a washing program. The active recycling period configuration in the pre-wash and rinsing phases are identical to the example in figure 3.

The example illustrated in figure 4 differs from the example in figure 3 regarding the active recycling periods during the main washing phase. In the first example, figure 3, the main washing phase comprises four active recycling periods wherein microfiber filtering in the recycling loop is performed, which periods are separated by three non-active recycling periods, wherein microfiber filtering is not performed. In the example of figure 4, the pumping of washing liquid through the microfiber filtering unit is performed continuously during the main washing phase, and thus, the recycling period is as long as or nearly as long as the main washing phase depending on that the recycling period is not active the periods of filling and/or emptying of washing liquid in the washing unit.

However, in some embodiments of the method S100, the recycling period also involves the periods of filling and/or emptying of washing liquid in the washing unit.

Figure 5 is a diagram illustrating the concentration variation of microfibers in a washing liquid over time. In said diagram, two graphs are illustrated, Recycling and Non-recycling. Recycling means that the recycling period is active, and the microfiber filtering is ON. At t=0, a washing phase is started and the concentration of microfibers will raise due to already lose microfibers in the textile to be washed are transferred into the washing liquid. As illustrated in the graph indicated "Non-recycling", i.e. recycling period is "OFF", the concentration of microfibers may increase due to the wear against the moving (rotating), washing unit, and the different textiles rubbing against each other. All the lose microfibers, which is not caught by the washed textiles again, are flushed out with the washing liquid when the washing unit is emptied, as in step S130. The concentration of microfibers in the washing liquid may be very high, as illustrated by the "non-recycling" graph. On the other hand, if one or more recycling pulses are performed, as in step S120, during the washing phase, the active recycling through the recycling loop and the filter for removing microfibers, i.e. microfiber filter unit, will gradually decrease the concentration of microfibers in the washing liquid, as illustrated by the graph marked "Recycling". At the end of the washing phase, the concentration may be zero, or at least close to zero, as the lose microfibers are stuck in and removed by the microfiber filtering unit. The washing machine user may then open the housing containing the filter unit and remove and destroy the caught microfibers, e.g. in a fire place, or leave them for plastic recycling.

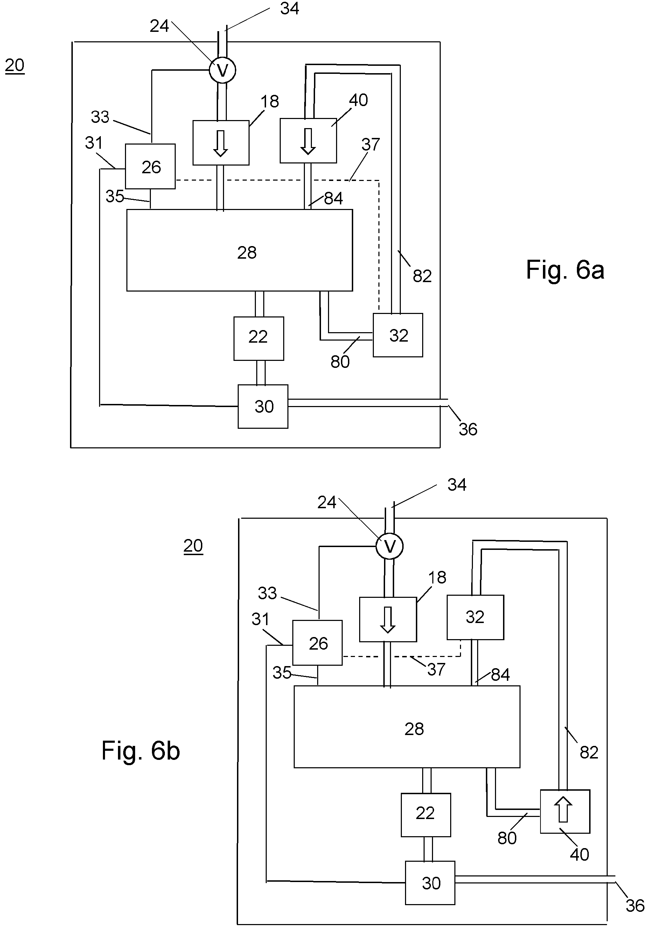

The pumping of a washing liquid through the microfiber filtering unit is performed by means of an additional pump (see 32 in figures 6a, 6b, 7 and 8). Said additional pump, herein denoted cycling or recycling pump, is preferably a smaller and less power consuming electric pump than the outlet pump that is configured for emptying the washing unit at a high liquid flow speed.

According to further embodiments, the filtering may be performed through a multistep microfiber filtering unit. **In** the multistep filtering unit, the filters of different steps may have different density and liquid permeability. The multistep microfiber filtering unit may also comprise a pre-filter having an inclined filter plane, which is inclined relative to the washing liquid stream direction at the filter inlet.

According to some embodiments, the microfiber filtering unit involves a filter bypass for bypassing washing liquid when the filter in the microfiber filtering unit is clogged reducing the permeability of the filter and creating an over pressure. The advantage of this arrangement is that the filter or filters may be temporary cleaned from clogging filter stuff.

The method and procedures described herein for controlling the machine 20 are implemented in digital electronically circuitry, or in computer hardware, firmware, software, or in combinations of them. A washing program may be implemented in a computer program product tangibly embodied in a machine readable storage device for execution by a programmable processor; and method steps may be performed by a programmable processor executing a program of instructions to perform functions of the machine by operating on input data and generating output.

The washing phases and processes are advantageously implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language.

Generally, a processor of the controller 26 will receive instructions and data from a read-only memory and/or a random access memory. Storage devices suitable for tangibly embodying computer program instructions and data include all forms of non-volatile memory, including by way of example semiconductor memory devices, such as EPROM (erasable programmable read only memory), EEPROM (electrically erasable programmable read only memory), and flash memory devices; magnetic disks such internal hard disks and removable disks; magneto-optical disks; and CD-ROM (Compact Disc Read-Only Memory) disks. Any of the foregoing may be supplemented by, or incorporated in, specially -designed ASICs (Application Specific Integrated Circuits).

The method and its embodiments are described and explained in more detail in the following description of a machine and its embodiments, which is an implementation of the method.

Figures 6a and 6b are schematically illustrating two embodiments of a machine adapted to collect microfibers. The embodiments of figures 6a and 6b are illustrative embodiments not falling under the scope defined by the claims.

The machines 20 in figure 3a and 3b differ from the prior art machine 20 illustrated in figure 1 in that the machines are implementing the method of a machine comprising a washing unit 28 for washing items by means of at least one washing liquid and a washing controller 26 for controlling the operation of the machine at least during washing phases by filtering the liquid being used during a washing phase at least once before the washing unit is emptied. During a recycling pulse, washing liquid is pumped from the washing unit 28 during active washing through a microfiber filtering unit 40 and back to the washing unit 28 to be used again. Thus, during a washing phase at least some of the washing liquid is cleaned in the microfiber filtering unit 40 and this lowers the microfiber concentration in the actively used washing liquid throughout the washing phase. The washing liquid is pumped via a conduit 80 from the washing unit 28 connected to a recycling pump 32 and from the recycling pump 32 via a conduit 82 to the microfiber filtering unit 40, wherein the used washing liquid is cleaned by filters. The filtered washing liquid is returned to the washing unit after having passed through the microfiber filtering unit 40. By repeatedly recycling the washing liquid through this recycling loop, the washing liquid is cleaned from microfibers and other pollution that are greater than a certain size depending on the density of the filter in the microfiber filtering unit 40. The filter or filters in the microfiber filtering unit is discussed further down in this description.

The recycling loop comprises the washing unit 28, a recycling pump 32, a microfiber filtering unit 40 and conduits or tubes connecting said units and pump.

**In** the embodiment according to figure 6a, the recycling pump 32 is located upstream in relation to the microfiber filtering off unit 40 in the recycling loop. The recycling pump 32 sucks washing liquid from the washing unit 28 and presses the washing liquid through the microfiber filtering unit 40 back into the washing unit 28.

**In** the embodiment according to figure 6b, the recycling pump 32 is located downstream in relation to the microfiber filtering off unit 40 in the recycling loop. The recycling pump 32 sucks washing liquid from the washing unit 28 through the microfiber filtering-off unit 40 and presses the washing liquid back into the washing unit 28.

Both embodiments have been successfully tested. However, the test results have indicated better cleaning of the washing liquid and less damage and wear for the recycling loop wherein the recycling pump 32 sucks washing liquid from the washing unit 28 through the microfiber filtering off unit 40 and presses the washing liquid back into the washing unit 28.

The recycling pump 32 is a pump driven by an electrically powered motor. It is controlled by the controller 26 via a control bus 37. The recycling process is controlled by the controller and the recycling pump is controlled to operate in different ways, e.g. continuously driven during a washing phase of a washing program or during short time intervals, herein called recycling pulses, of a washing phase of a washing program. Said operation of the recycling process and recycling pump is discussed further down in this description.

In some embodiments, the outlet pump 30 may be used for recycling the washing liquid. However, the advantage of using a separate pump instead of the outlet pump for the recycling of the liquid is that the outlet pump has to be adapted for emptying the washing unit as fast as possible and therefore needs to be stronger and use more electric power than a recycling process needs. Thus, the recycling pump 32 is designed and dimensioned for saving power compared to the outlet pump 30, which is stronger and bigger.

As in the prior art machine described above (see figure 1), the detergent is placed in a detergent compartment 18 of the machine, which compartment is flushed with liquid when a washing program is started. The liquid is provided via a liquid inlet 34 that may be opened or closed by means of a controller controlled valve 24. The washing detergent(s) may be provided in any available suitable shape or consistency; e.g. as powder, pellets, solid unit, or soaked in the fibers of the filter members.

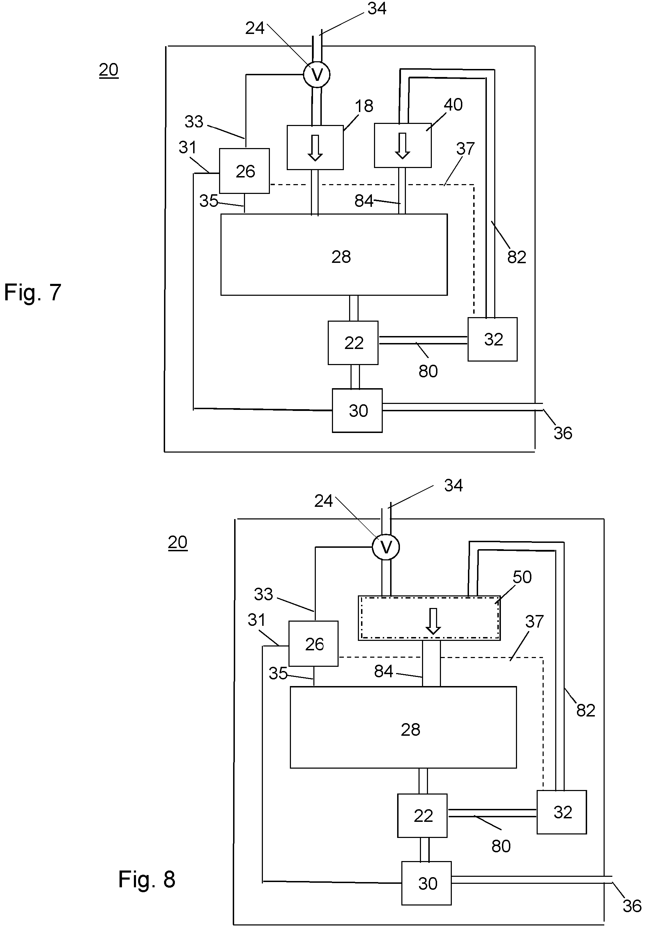

In figure 7 is illustrated an embodiment of the machine 20 not falling under the scope defined by the claims. The recycling loop of the machine according to this embodiment comprises the outlet filter 22. As already mentioned above, the outlet filter is a removable filter for collecting hard and/or large items, e.g. buttons, needles, coins, seeds, stones, gravels, broken glass, etc. The outlet filter is placed upstream from the recycling pump, i.e. between the recycling pump 32 and the washing unit 28, to protect the pump from being harmed by such hard items.

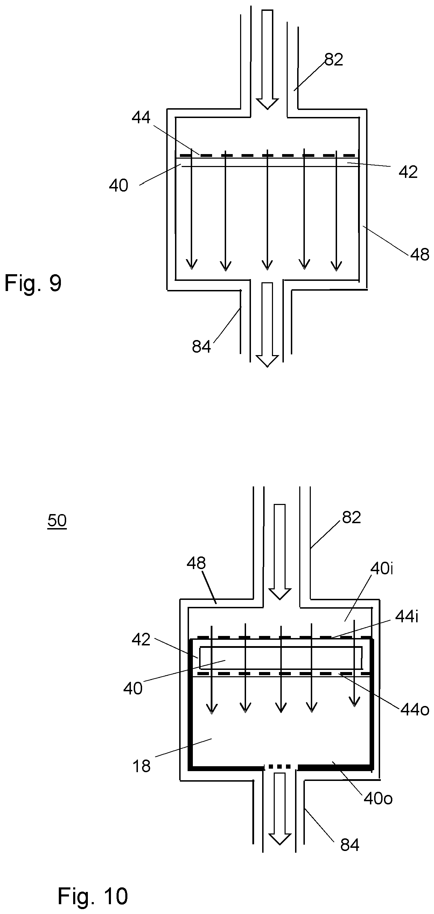

In figure 8 a machine 20 according to the invention is illustrated. The machine is provided with filtering capabilities to filter the liquid prior, during, and after the washing procedure. A combined unit is provided with a combination of a controlled release of at least one detergent compound in the washing, cleaning, or after treatment process, and of filtration of liquid prior, during, and after washing. A detergent compartment 18 and a microfiber filtering unit 40 is combined and integrated to a detergent and filter unit 50, see also figure 10 herein. Thus, the recycling loop of the machine according to the invention comprises a detergent compartment 18 and a microfiber filtering off unit 40 which are combined and integrated to a common detergent and filter unit 50. If the detergent compartment is divided into different sub-compartment, one for prewashing, one for main wash and one for the rinse, it is possible to direct the recycled liquid into the prewashing compartment as this is emptied of detergent at the start of the prewash.

According to one embodiment, the microfiber filtering unit and an openable and closable detergent compartment is arranged together such that the microfiber filtering unit is accessible to a user for enabling cleaning or replacement of each filter in the microfiber filtering unit.

**In** figure 9 is schematically illustrating one embodiment of a microfiber filtering unit 40. According to one embodiment, the microfiber filtering unit 40 comprises one removable single filter sheet 44 kept in place by a filter frame arrangement 42 comprising a filter plane having a filter area within the frame. The filter sheet may be clamped by the filter frame arrangement. The conduits 82, 84 of the recycling loop is also illustrated, wherein the inlet conduit 82 is defining the inlet side of the filter and the outlet conduit 84 is defining the outlet side of a housing 48 enclosing the filter 40. The arrows are illustrating the flow direction. The filter housing 48 is configured to lead all the recycled washing liquid through the filter unit 40. **In** this embodiment, the filter plane is perpendicular to the flow direction (see arrows) of the recycled washing liquid. **In** other embodiments, the filter plane may be arranged in a leaning angel to the flow direction through the filter housing 48. The filter sheet is not limited to be designed as a plane or a leaning plane, but can be of another shape, for example formed like a cone, folded several times to increase filter area, or another shape.

The recycling loop according to this embodiment comprises a housing comprising a detergent compartment 18 and a microfiber filtering unit 40 which are combined and integrated to a common detergent and filter unit 50. The inlet conduit 82 is defining the inlet side of the filter and the outlet conduit 84 is defining the outlet side of the filter housing 48. The microfiber filtering unit 40 comprises a number of stacked filter sheets 44i, sitting on the inlet side 50i, and 44o, sitting on the outlet side 50o, kept in place by a frame arrangement 42 of the microfiber filtering unit 40 of the detergent and filter unit 50. The filter sheet may be clamped by the filter frame arrangement. The inlet conduit 82 is defining the inlet side 50i of the unit 50 and the outlet conduit 84 is defining the outlet side 50o of the unit 50.. The filter housing 48 is configured to lead all the recycled washing liquid through the filter unit 40. In this embodiment, the filter plane is perpendicular to the flow direction (see arrows) of the recycled washing liquid. In other embodiments, the filter plane may be arranged in a leaning angel to the flow direction through the filter housing 48.

If the detergent compartment 18 is divided into different sub-compartment, one for prewashing, one for main wash and one for the rinse, it is possible to direct the recycled liquid into any of the sub-compartments by means of the controller and a valve arrangement controlled by the controller. The recycled liquid or washing liquid is conducted to the detergent in any sub-compartment of the detergent compartment of the housing in the recycling loop during a recycling pulse for transporting the detergent into the washing unit. As the microfiber filter unit is provided upstream the detergent compartment, any empty sub-compartment could be used for recycling the washing liquid back to the washing unit.

According to further embodiments, the microfiber filtering unit involves a filter bypass for bypassing washing liquid when the filter in the microfiber filtering unit is clogged reducing the permeability of the filter and creating an over pressure. Said over pressure may destroy the filter.

It is already mentioned above, the method and machine provides different possibilities to operate the recycling pump via the controller. According to one embodiment, the recycling pumping of a washing liquid through the microfiber filtering unit is performed in pulses of predetermined lengths, and time intervals between the pulses and during a washing phase.

According to another embodiment of the machine, the recycling of the washing liquid through the microfiber filtering unit is performed continuously during a washing phase.

According to yet another embodiment of the machine, the method for removing microfibers in the washing liquid through the microfiber filtering unit is performed when a washing program for synthetic materials are selected and used in the machine.

It is possible to use both the above embodiments in a washing program. In one washing phase, the recycling of a washing liquid through the microfiber filtering unit is performed in pulses of predetermined lengths, and time intervals between the pulses and during a washing phase, and in another phase, the washing liquid is continuously through the microfiber filtering unit during the washing phase.

The machine further provides the recycle of the washing liquid through a conduit system comprising conduits and/or tubes 80, 82, 84 connecting at least one pump 30, 32, the microfiber filtering unit and the washing unit 28 of a recycling loop.

According to yet one embodiment of the machine, the outlet pump 30 used for emptying the washing unit 28 is also used for recycling the washing liquid through the microfiber filtering unit 40.

In another embodiment of the method, the recycle pumping of a washing liquid through the microfiber filtering unit 40 is performed by means of an additional pump, herein called recycling pump 32 (See Fig. 7 and Fig. 8), instead of using the outlet pump 30 that is configured for emptying the washing unit.

The pump 30, 32 comprises an electrically driven pump and sometimes controlled valves for selecting liquid inlets and outlets in dependence of the washing program executed by a controller 26 of the machine 20. Said electrically driven pump and controlled valves are controlled by the controller 26 sending control signals, e.g. start pump, stop pump, speed control signals to the pump, open a control valve, close a control valve, etc. via the control bus 31, 37. The controller 26 is configured to control and direct liquid pumped via the pump 30, 32 to any of the inlet 34, outlet 36, via the recycling loop.

According to further embodiments, a combined detergent and filter unit presented in SE1650717-0 may be used in the machine. Said combined detergent and filter unit has at least one pocket including a washing detergent compound, and provided with filtering capabilities to filter the liquid prior, during, and after the washing procedure. The combined unit comprises at least one pocket configured to contain at least one compound intended for at least one phase of a washing program. The combined unit comprises two sides, an inlet side and an outlet side, and the sides of the unit are intended for inlet and outlet liquid, respectively, into and out from the combined unit. The inlet side and the outlet side are constituted by liquid permeable filter members.

When the washing program is finished, the machine operator removes the combined microfiber filter and detergent unit in the microfiber filtering unit 40 with the gathered microfibers.

The continuous or pulsed recycling of the washing liquid during a washing phase improves the fiber reduction in the washing liquid instead of only one long recycling of all the washing liquid at the end of the washing program phase. The continuous or pulsed recycling of the washing liquid reduces the risk for filter clogging as the concentration of microfibers in the liquid is continuously reduced or is reduced continuously during each pulse period a washing program phase.

As mentioned above, the microfiber filtering unit 40, standing alone or in a combined detergent and filter unit 50, may comprise a filter bypass.

The filter bypass enables the regulation and control of the pressure in the detergent and filter unit 50. Further, it enables a flushing of the microfiber filtering unit 40 on the outlet side from microfibers collected on the inlet side of the filter 44.

**In** operation, the liquid is pressurized by a pump upstream the detergent and filter unit 50 and liquid is guided by the inlet tube 82 (See Figs 6-8). Microfibers, etc. are stopped by the filters of microfiber filtering unit 50, which filter or filters can be removed when the washing program has ended and the detergent and filter unit 50 is opened by a user.

The machine is configured to recycle used liquid through the detergent and filter unit 50 at the end of the phase of the washing program at the liquid exit from the washing unit and the machine. However, the pollution and contamination may clog the filter or filters during operation of a washing program resulting in no or poor liquid permeability of the detergent and filter unit 50.

According to one alternative, the machine is configured to recycle the used washing liquid continuously during the running phase of the executed washing program.

According to further one alternative, the machine is configured to recycle the used liquid a predetermined number of times during the running phase of the executed washing program, each recycling lasting a predetermined time period.

During the recycling of the washing liquid via and through the detergent and filter unit 50, the pollution and contamination of the liquid will be collected by the filter, especially on the inlet side and the outlet side that are constituted by liquid permeable filter or filters. The pollution and contamination may clog the microfiber filtering unit 40 during operation of a washing program resulting in no or poor liquid permeability. If the permeability of the filtering unit is poor or non-existing due to the amount of gathered pollution and contamination stuff, the pressure of the liquid in the inlet space 40i formed in front of the combined unit will increase. The permeability of the microfiber filtering unit 40 increases as some of the pollution and contamination are transported away. With increased permeability, the power level in the inlet space 50i will decrease resulting in that the filter bypass is closed, and the flow of liquid through the microfiber filtering unit 40 is directed downstream from inlet side to outlet side.

The present invention is not limited to the above-described preferred embodiments. Various alternatives, modifications and equivalents may be used. Therefore, the above embodiments should not be taken as limiting the scope of the invention, which is defined by the appending claims.

## Claims

**1.** Method for a washing machine comprising a washing unit (28) for washing items by means of at least one washing liquid and a washing controller (26) for controlling the operation of the machine at least during washing phase periods of a washing program executed by the washing machine, the method comprising:

- filling (S110) the washing unit (28) with washing liquid up to a predetermined volume;
- pumping (S120) during a washing phase period a recycling volume of the washing liquid being used through a filtering unit (40) in a recycling loop back into the washing unit (28), wherein the recycling loop enables repeatedly filtering of the washing liquid volume for microfibers and removing the microfibers, wherein the pumping of the recycling volume through the filtering unit (40) is performed by means of an additional pump (32) beside a pump (30) that is configured for emptying the washing unit (28) or wherein the pumping of the recycling volume through the filtering unit (40) is performed by means of a pump (30) that is configured for emptying the washing unit (28), and
- emptying (S130) washing liquid out of the washing unit (28) at the end of the washing phase period,

**characterized by** the filtering unit (40) being comprised in a common detergent and filter unit (50), which common detergent and filter unit (50) further comprises a detergent compartment (18), and which common detergent and filter unit (50) is configured to release at least one detergent compound in the washing, cleaning, or after treatment process, and of filtration of washing liquid prior, during, and after washing.

**2.** The method according to any of the preceding claims, wherein the pumping during washing phase periods involves pumping the recycling volume multiple times through the filtering unit (40).

**3.** The method according to any of the preceding claims, wherein the pumping of the recycling volume through the filtering unit (40) is performed continuously during a washing phase period, as one recycling pulse, wherein the recycling pulse has a time period being less or equal to a washing phase period.

4. The method according to any of the preceding claims, performing the pumping through the filtering unit (40) comprising one removable single filter sheet kept in place by a frame arrangement.

5. The method according to any of claims 1 - 4, performing pumping through the filtering unit (40) comprising a number of stacked filter sheets kept in place by a frame arrangement.

6. A washing machine comprising a washing unit (28) for washing items by means of at least one washing liquid and a washing controller (26) configured to control the operation of the washing machine at least during washing phase periods of a washing program executed by the washing machine, the washing machine comprising:

a washing liquid inlet device to fill the washing unit (28) with washing liquid up to a predetermined volume;
a recycling loop comprising a filtering unit (40) configured to pump during a washing phase period a recycling volume of the washing liquid being used through a the filtering unit (40) in the recycling loop and back into the washing unit (28) for removal of microfibers, wherein the pumping of the recycling volume through the filtering unit (40) is performed by means of an additional pump (32) beside a pump (30) that is configured for emptying the washing unit (28), or wherein the pumping of the recycling volume through the filtering unit (40) is performed by means of the pump (30) that is configured for emptying the washing unit (28), and
an outlet device to empty washing liquid out of the washing unit (28) at the end of the washing phase period,

**characterized in that** the filtering unit (40) is comprised in a common detergent and filter unit (50), which common detergent and filter unit (50) further comprises a detergent compartment (18), and which common detergent and filter unit (50) is configured to release at least one detergent compound in the washing, cleaning, or after treatment process, and of filtration of washing liquid prior, during, and after washing.

7. The washing machine according to claim 6, wherein the recycling volume during one or more washing phase periods is larger than the predetermined volume of washing liquid.

8. The washing machine according to claim 6, wherein the recycling volume during one or more washing phase periods is less than the predetermined volume of washing liquid.

9. The washing machine according to any of claims 6 - 8, wherein the recycling loop is a conduit system (80, 82, 84) connecting at least one pump (30, 32), the filtering unit (40) and the washing unit (28) in a loop.

10. The washing machine according to any of claims 6 - 9, wherein the filtering unit (40) comprises a filter bypass configured to bypass washing liquid when the filter in the filtering unit (40) is clogged reducing the permeability of the filter and creating an over pressure.

**Patentansprüche**

1. Verfahren für eine Waschmaschine, umfassend eine Wascheinheit (28) zum Waschen von Waschgut mittels mindestens einer Waschflüssigkeit, und eine Waschsteuerung (26) zum Steuern des Betriebs der Maschine mindestens während Waschphasenperioden eines durch die Waschmaschine ausgeführten Waschprogramms, wobei das Verfahren Folgendes umfasst:

- Befüllen (S110) der Wascheinheit (28) mit Waschflüssigkeit bis zu einem vorbestimmten Volumen;
- Pumpen (S120) eines Wiederverwertungsvolumens der verwendeten Waschflüssigkeit während einer Waschphasenperiode durch eine Filtereinheit (40) in einem Wiederverwertungskreislauf zurück in die Wascheinheit (28), wobei der Wiederverwertungskreislauf ein wiederholtes Filtern des Waschflüssigkeitsvolumens nach Mikrofasern und Entfernen der Mikrofasern ermöglicht, wobei das Pumpen des Wiederverwertungsvolumens durch die Filtereinheit (40) mittels einer zusätzlichen Pumpe (32) neben einer Pumpe (30) durchgeführt wird, die zum Entleeren der Wascheinheit (28) konfiguriert ist, oder wobei das Pumpen des Wiederverwertungsvolumens durch die Filtereinheit (40) mittels einer Pumpe (30) durchgeführt wird, die zum Entleeren der Wascheinheit (28) konfiguriert ist, und
- Entleeren (S130) von Waschflüssigkeit aus der Wascheinheit (28) am Ende der Waschphasenperiode,

**dadurch gekennzeichnet, dass** die Filtereinheit (40) in einer kombinierten Waschmittel- und Filtereinheit (50) enthalten ist, wobei die kombinierte Waschmittel- und Filtereinheit (50) ferner ein Waschmittelfach (18) umfasst und die kombinierte Waschmittel- und Filtereinheit (50) dazu konfiguriert ist, mindestens eine Waschmittelmittelverbindung in dem Wasch-, Reinigungs- oder Nachbehandlungsprozess und beim Filtrieren von Waschflüssigkeit vor, während und nach dem Waschen freizusetzen.

**2.** Verfahren nach einem der vorhergehenden Ansprüche, wobei das Pumpen während Waschphasenperioden das mehrfache Pumpen des Wiederverwertungsvolumens durch die Filtereinheit (40) beinhaltet.

**3.** Verfahren nach einem der vorhergehenden Ansprüche, wobei das Pumpen des Wiederverwertungsvolumens durch die Filtereinheit (40) kontinuierlich während einer Waschphasenperiode als ein Wiederverwertungsimpuls durchgeführt wird, wobei der Wiederverwertungsimpuls eine Zeitperiode aufweist, die kleiner als eine Waschphasenperiode oder gleich dieser ist.

**4.** Verfahren nach einem der vorhergehenden Ansprüche, wobei das Pumpen durch die Filtereinheit (40) erfolgt, die ein entfernbares einzelnes Filterblatt umfasst, das durch eine Rahmenanordnung in Position gehalten wird.

**5.** Verfahren nach einem der Ansprüche 1-4, wobei das Pumpen durch die Filtereinheit (40) erfolgt, die eine Anzahl gestapelter Filterblätter umfasst, die durch eine Rahmenanordnung in Position gehalten werden.

**6.** Waschmaschine mit einer Wascheinheit (28) zum Waschen von Waschgut mittels mindestens einer Waschflüssigkeit und einer Waschsteuerung (26), die dazu konfiguriert ist, den Betrieb der Waschmaschine mindestens während Waschphasenperioden eines durch die Waschmaschine ausgeführten Waschprogramms zu steuern, wobei die Waschmaschine Folgendes umfasst:

eine Waschflüssigkeitseinlassvorrichtung zum Befüllen der Wascheinheit (28) mit Waschflüssigkeit bis zu einem vorbestimmten Volumen;
einen Wiederverwertungskreislauf, umfassend eine Filtereinheit (40), der dazu konfiguriert ist, während einer Waschphasenperiode ein Wiederverwertungsvolumen der verwendeten Waschflüssigkeit durch die Filtereinheit (40) in den Wiederverwertungskreislauf und zurück in die Wascheinheit (28) zum Entfernen von Mikrofasern zu pumpen, wobei das Pumpen des Wiederverwertungsvolumens durch die Filtereinheit (40) mittels einer zusätzlichen Pumpe (32) neben einer Pumpe (30) durchgeführt wird, die zum Entleeren der Wascheinheit (28) konfiguriert ist oder wobei das Pumpen des Wiederverwertungsvolumens durch die Filtereinheit (40) mittels der Pumpe (30) durchgeführt wird, die zum Entleeren der Wascheinheit (28) konfiguriert ist, und
eine Auslassvorrichtung zum Entleeren der Waschflüssigkeit aus der Wascheinheit (28) am Ende der Waschphasenperiode,

**dadurch gekennzeichnet, dass** die Filtereinheit (40) in einer kombinierten Waschmittel- und Filtereinheit (50) enthalten ist, wobei die kombinierte Waschmittel- und Filtereinheit (50) ferner ein Waschmittelfach (18) umfasst und die kombinierte Waschmittel- und Filtereinheit (50) dazu konfiguriert ist, mindestens eine Waschmittelmittelverbindung in dem Wasch-, Reinigungs- oder Nachbehandlungsprozess und beim Filtrieren von Waschflüssigkeit vor, während und nach dem Waschen freizusetzen.

**7.** Waschmaschine nach Anspruch 6, wobei das Wiederverwertungsvolumen während einer oder mehrerer Waschphasenperioden größer ist als das vorbestimmte Volumen an Waschflüssigkeit.

**8.** Waschmaschine nach Anspruch 6, wobei das Wiederverwertungsvolumen während einer oder mehrerer Waschphasenperioden kleiner ist als das vorbestimmte Volumen an Waschflüssigkeit.

**9.** Waschmaschine nach einem der Ansprüche 6-8, wobei der Wiederverwertungskreislauf ein Leitungssystem (80, 82, 84) ist, das mindestens eine Pumpe (30, 32), die Filtereinheit (40) und die Wascheinheit (28) in einem Kreislauf verbindet.

**10.** Waschmaschine nach einem der Ansprüche 6-9, wobei die Filtereinheit (40) eine Filterumleitung umfasst, die dazu konfiguriert ist, Waschflüssigkeit umzuleiten, wenn das Filter in der Filtereinheit (40) verstopft ist, wodurch die Durchlässigkeit des Filters verringert und ein Überdruck erzeugt wird.

## Revendications

**1.** Procédé pour une machine à laver comprenant une unité de lavage (28) pour laver des articles au moyen d'au moins un liquide de lavage et un contrôleur de lavage (26) pour commander le fonctionnement de la machine au moins pendant les périodes de phase de lavage d'un programme de lavage exécuté par la machine à laver, le procédé comprenant :

- le remplissage (S110) de l'unité de lavage (28) avec du liquide de lavage jusqu'à un volume prédéterminé ;
- le pompage (S120) pendant une période de phase de lavage d'un volume de recyclage du liquide de lavage utilisé à travers une unité de filtrage (40) dans une boucle de recyclage vers l'unité de lavage (28), la boucle de recyclage permettant de filtrer de manière répétée le volume de liquide de lavage pour les microfibres et d'éliminer les microfibres, le pompage du volume de recyclage à travers l'unité de filtrage (40) étant effectué au moyen d'une pompe supplémentaire (32) à côté d'une pompe (30) qui est configurée pour vider l'unité de lavage (28) ou le pompage du volume de recyclage à travers l'unité de filtrage (40) étant effectué au moyen d'une pompe (30) qui est configurée pour vider l'unité de lavage (28), et
- le vidage (S130) du liquide de lavage hors de l'unité de lavage (28) à la fin de la période de phase de lavage,

**caractérisé** en **ce que** l'unité de filtrage (40) est comprise dans une unité commune de détergent et de filtre (50), laquelle unité commune de détergent et de filtre (50) comprend en outre un compartiment de détergent (18), et laquelle unité commune de détergent et de filtre (50) est configurée pour libérer au moins un composé détergent dans le processus de lavage, de nettoyage ou de post-traitement, et de filtration du liquide de lavage avant, pendant et après le lavage.

**2.** Procédé selon l'une quelconque des revendications précédentes, dans lequel le pompage pendant les périodes de phase de lavage implique le pompage du volume de recyclage plusieurs fois à travers l'unité de filtrage (40).

**3.** Procédé selon l'une quelconque des revendications précédentes, dans lequel le pompage du volume de recyclage à travers l'unité de filtrage (40) est effectué en continu pendant une période de phase de lavage, sous la forme **d'une** impulsion de recyclage, l'impulsion de recyclage ayant une période de temps inférieure ou égale à une période de phase de lavage.

**4.** Procédé selon l'une quelconque des revendications précédentes, l'exécution du pompage à travers l'unité de filtrage (40) comprenant une feuille filtrante unique amovible maintenue en place par un agencement de cadre.

**5.** Procédé selon l'une quelconque des revendications 1 à 4, l'exécution du pompage à travers l'unité de filtrage (40) comprenant un certain nombre de feuilles filtrantes empilées maintenues en place par un agencement de cadre.

**6.** Machine à laver comprenant une unité de lavage (28) pour laver des articles au moyen d'au moins un liquide de lavage et un contrôleur de lavage (26) configuré pour commander le fonctionnement de la machine à laver au moins pendant les périodes de phase de lavage d'un programme de lavage exécuté par la machine à laver, la machine à laver comprenant :

un dispositif d'admission de liquide de lavage pour remplir l'unité de lavage (28) avec du liquide de lavage jusqu'à un volume prédéterminé ;
une boucle de recyclage comprenant une unité de filtrage (40) configurée pour pomper pendant une période de phase de lavage un volume de recyclage du liquide de lavage utilisé à travers une unité de filtrage (40) dans la boucle de recyclage et vers l'unité de lavage (28) pour l'élimination des microfibres, le pompage du volume de recyclage à travers l'unité de filtrage (40) étant effectué au moyen d'une pompe supplémentaire (32) à côté d'une pompe (30) qui est configurée pour vider l'unité de lavage (28), ou le pompage du volume de recyclage à travers l'unité de filtrage (40) étant effectué au moyen de la pompe (30) qui est configurée pour vider l'unité de lavage (28), et
un dispositif de sortie pour vider le liquide de lavage hors de l'unité de lavage (28) à la fin de la période de phase de lavage,
**caractérisée en ce que** l'unité de filtrage (40) est comprise dans une unité commune de détergent et de filtre (50), laquelle unité commune de détergent et de filtre (50) comprend en outre un compartiment à détergent (18), et laquelle unité commune de détergent et de filtre (50) est configurée pour libérer au moins un composé détergent dans le processus de lavage, de nettoyage ou de post-traitement, et de filtration du liquide de lavage avant, pendant et après le lavage.

**7.** Machine à laver selon la revendication 6, dans laquelle le volume de recyclage pendant une ou plusieurs périodes de phase de lavage est supérieur au volume prédéterminé de liquide de lavage.

**8.** Machine à laver selon la revendication 6, dans laquelle le volume de recyclage pendant une ou plusieurs périodes de phase de lavage est inférieur au volume prédéterminé de liquide de lavage.

**9.** Machine à laver selon l'une quelconque des revendications 6 à 8, dans laquelle la boucle de recyclage est un système de conduits (80, 82, 84) reliant au moins une pompe (30, 32), l'unité de filtrage (40) et l'unité de lavage (28) dans une boucle.

**10.** Machine à laver selon l'une quelconque des revendications 6 à 9, dans laquelle l'unité de filtrage (40) comprend une dérivation de filtre configurée pour contourner le liquide de lavage lorsque le filtre dans l'unité de filtrage (40) est obstrué, réduisant la perméabilité du filtre et créant une surpression.

34
24
V
18
20
33
31
26
35
28
22
30
36

Fig. 1 prior art

START
Filling the washing unit with washing liquid to a predetermined washing volume level
S110
S120
Filtering during a washing phase period a recycling volume of the washing liquid being used through a microfiber filtering unit in a recycling loop back into the washing unit, wherein the recycling loop enables repeatedly filtering of the washing liquid volume for microfibers in recycling pulses, a recycling pulse having a time period being less or equal to a washing phase period
S130
Emptying washing liquid out of the washing unit of at the end of the washing phase period
STOP

Fig. 2

Pre-
wash
Main washing
rinsing
S120
S120
ON
OFF
t
S110
S130
S110
S130
S110
S130

Fig. 3

Pre-
wash
rinsing
S120
Main washing
S120
ON
OFF
S110
S130
S110
S130
S110
S130

Fig. 4

Conc.
Non-recycling
Recycling
S110
S120 is started
t=0
S130
t

Fig. 5

34
24
20
V
18
40
33
31
26
37
35
84
28
82
32
22
80
30
36
34
24
20
V
18
32
33
31
26
37
35
84
28
82
22
80
40
30
36

Fig. 6a

Fig. 6b

20
34
24
V
18
40
33
31
26
37
35
84
28
82
22
32
80
30
36
20
34
24
V
50
33
31
26
37
35
84
28
82
22
32
80
30
36

Fig. 7

Fig. 8

82
44
42
40
48
84

Fig. 9

50
82
48
40i
44i
42
40
44o
18
40o
84

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11276794 A
- WO 0248445 A1
- SE 16507170